# EUROPEAN PATENT SPECIFICATION

(11) **EP 3 133 555 B1**
(45) Date of publication and mention of the grant of the patent: **10.04.2019**
(21) Application number: 16180432.3
(22) Date of filing: 20.07.2016
(51) Int. Cl.: G01N 23/046, G06T 11/00

(54) **NOVEL DATA PROCESSING IN A TOMOGRAPHIC IMAGING APPARATUS**
NEUARTIGE DATENVERARBEITUNG IN EINER TOMOGRAPHISCHEN BILDGEBUNGSVORRICHTUNG
NOUVEAU TRAITEMENT DE DONNÉES DANS UN APPAREIL D'IMAGERIE TOMOGRAPHIQUE

(30) Priority: 02.09.2015 EP 15183475; 17.08.2015 EP 15181202; 24.08.2015 EP 15182129
(43) Date of publication of application: 22.02.2017
(73) Proprietor: FEI Company, Hillsboro, OR 97124-5793 (US)
(72) Inventor: Kingston, Andrew, Kambah, Australian Capital Territory ACT 2902 (AU); Latham, Shane, Griffith, Australian Capital Territory ACT 2603 (AU); Sheppard, Adrian, Fisher, Australian Capital Territory ACT 2611 (AU); Myers, Glenn, Waramanga, Australian Capital Territory ACT 2611 (AU); Recur, Benoit, Turner, Australian Capital Territory ACT 2612 (AU); Li, Heyang, Harrison, Australian Capital Territory ACT 2914 (AU)
(74) Representative: Janssen, Francis-Paul

(56) References cited:
- WO-A1-2015/125086
- US-B1- 6 240 157
- ABBAS SAJID ET AL: "Effects of sparse sampling schemes on image quality in low-dose CT", MEDICAL PHYSICS, AIP, MELVILLE, NY, US, vol. 40, no. 11, 111915, 21 October 2013 (2013-10-21), pages 1-12, XP012178419, ISSN: 0094-2405, DOI: 10.1118/1.4825096 [retrieved on 1901-01-01]
- BLEUET P ET AL: "SEM-based system for 100nm x-ray tomography for the analysis of porous silicon", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 9212, 11 September 2014 (2014-09-11), pages 92120Z-92120Z, XP060039548, DOI: 10.1117/12.2059065 ISBN: 978-1-62841-730-2
- NAKAJIMA MASAHIRO ET AL: "Micro-CT imaging of Caenorhabditis elegans under environmental-SEM", PROCEEDINGS OF THE 2013 INTERNATIONAL SYMPOSIUM ON MICRO-NANOMECHATRONICS AND HUMAN SCIENCE (MHS), 10 November 2013 (2013-11-10), pages 1-2, XP032550974, DOI: 10.1109/MHS.2013.6710422 [retrieved on 2014-01-13]
- S. MATEJ ET AL: "Iterative Tomographic Image Reconstruction Using Fourier-Based Forward and Back-Projectors", IEEE TRANSACTIONS ON MEDICAL IMAGING., vol. 23, no. 4, 1 April 2004 (2004-04-01), pages 401-412, XP055524739, US ISSN: 0278-0062, DOI: 10.1109/TMI.2004.824233

## Description

The invention relates to a method of investigating a specimen using a tomographic imaging apparatus comprising:
- A specimen holder, for holding the specimen;
- A source, for producing a beam of radiation that can be directed at the specimen;
- A detector, for detecting a flux of radiation transmitted through the specimen from the source;
- A stage apparatus, for producing relative motion (positioning) of the source with respect to the specimen, so as to allow the source and detector to image the specimen along a series of different viewing axes;
- A processing apparatus, for performing a mathematical reconstruction step whereby output from the detector is compiled into a tomographic image of at least part of the specimen,

The invention also relates to a tomographic imaging apparatus that can be used in performing such a method.

The invention further relates to a charged-particle microscope provided with such a tomographic imaging apparatus.

In tomographic imaging (also referred to as Computed Tomography (CT)) as referred to above, the source and (diametrically opposed) detector are used to look through the specimen along different lines of sight (viewing axes), so as to acquire penetrative observations of the specimen from a variety of perspectives; these are then used as input to a mathematical procedure that produces a reconstructed "volume image" of (part of) the (interior of) the specimen. In order to achieve a series of different lines of sight as alluded to here, one can, for example, choose to:
(a) Keep the source and detector static and move the specimen relative to them;
(b) Keep the specimen static and move the source relative to it. In this case, one can elect to:
   - Move the detector in synchronization with the source; or
   - Embody the detector as a (static) array of sub-detectors, with positions matched to correspond to the different positions to be assumed by the source.

Regardless of whether the source or specimen is moved, it is possible to describe their relative motion using (for example) a specimen-centric coordinate system / reference frame. The beam of radiation that traverses the specimen can, for example, be regarded as being cone-like (thus yielding so-called cone beam tomography) or resembling a segment of a disc (thus yielding so-called fan beam tomography), depending on the geometry/shape that the detector "presents" to the source; a parallel/collimated beam is also possible. The "viewing axis" alluded to here can be regarded as corresponding to an "optical axis" along which the beam (from source through specimen to detector) propagates; it basically corresponds to the position of a central/median/core ray in that beam. In order to achieve sufficient sample penetration, the employed radiation will generally comprise X-rays.

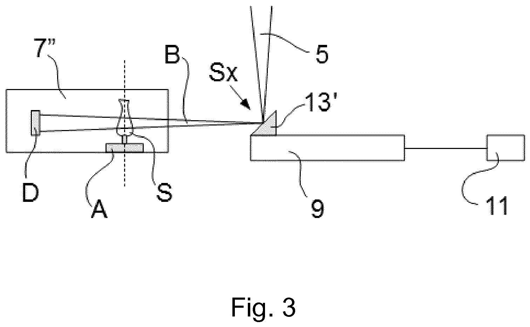

Tomographic imaging as referred to here can be performed using a standalone apparatus, which is conventionally the case in medical imaging applications, for example, where the specimen (e.g. a human or animal) is macroscopic. Standalone CT tools are also available for performing so-called "micro CT", in which a micro-focused source is used to image microscopic specimens, *e.g*. in geology/petrology, biological tissue studies, etc. Continuing this drive toward ever-greater resolution, so-called "nano CT" instruments have also been developed; these may be standalone tools, but, for example, they may also be embodied as (add-on) modules for (a vacant vacuum/interface port of) a charged-particle microscope (CPM), in which case the CPM's charged-particle beam is used to irradiate a metal target, causing production of the *Bremsstrahlung* X-rays used to perform the desired tomography (see Figure 3, for example). More information on (some) of these topics can, for example, be gleaned from the following references:
https://en.wikipedia.org/wiki/X-ray_microtomography
https://en.wikipedia.org/wiki/Nanotomography
http://www.ndt.net/article/dir2007/papers/24.pdf

It should be noted that, as referred to here in the context of a CPM, the phrase "charged particle" should be broadly construed as encompassing:
- Electrons, as in the case of a Transmission Electron Microscope (TEM), Scanning Electron Microscope (SEM), and Scanning Transmission Electron Microscope (STEM), for instance. See, for example, the following references:
   http://en.wikipedia.org/wiki/Electron_microscope
   http://en.wikipedia.org/wiki/Scanning_electron_microscope
   http://en.wikipedia.org/wiki/Transmission_electron_microscopy
   http://en.wikipedia.org/wiki/Scanninq transmission electron microscopy
- Ions, which may be positive (e.g. Ga or He ions) or negative. Such ion beams can be used for imaging purposes, but they are also often used for surface modification purposes, e.g. as in the case of Focused Ion Beam (FIB) milling, Ion-Beam-Induced Deposition (IBID), Ion-Beam-Induced Etching (IBIE), etc. See, for example, the following references:
   https://en.wikipedia.org/wiki/Focused ion beam
   http://en.wikipedia.org/wiki/Scanning Helium Ion Microscope
   W.H. Escovitz, T.R. Fox and R. Levi-Setti, Scanning Transmission Ion Microscope with a Field Ion Source, Proc. Nat. Acad. Sci. USA 72(5), pp 1826-1828 (1975).
   - Other charged particles, such as protons and positrons, for instance. See, for example, the following reference:
      http://www.ncbi.nlm.nih.gov/pubmed/22472444

It should also be noted that, in addition to imaging and/or surface modification, a charged particle beam in a CPM may also have other functionalities, such as performing spectroscopy, examining diffractograms, *etc*.

As regards the specimen/source relative motion employed to achieve different lines of sight / viewing axes [data acquisition step], use is conventionally made of:
- A circular scan, in which the source follows a planar orbit about the specimen, and images are captured at a relatively high sampling rate (*i.e*. quasi-continuously) along this orbit. This type of scan can be applied in situations where only a relatively thin "slice" of a specimen has to be imaged, *e.g*. when making a cone beam CT scan of human dentition. See, for example, the following reference:
   https://en.wikipedia.org/wiki/Cone beam computed tomography
- A helical scan, in which the source follows a coil-like (spiral) path about a (longitudinal) axis of the specimen, and images are again captured at a relatively high sampling rate (*i.e*. quasi-continuously) along this path. This type of scan can be applied in situations where a relatively elongated portion of a specimen has to be imaged, *e.g*. when making a CT scan of (a portion of) a human vertebral column. It is typically achieved by combining circular motion (*e.g*. of the source) and concurrent translational motion (*e.g*. of the specimen). See, for example, the following reference:
   https://en.wikipedia.org/wiki/Spiral computed tomography
- As an alternative to conventional curvilinear scan loci - such as the circular/spiral scan paths just referred to - one can, for example, also make use of a lattice-like data acquisition locus, e.g. as set forth in co-pending European Patent Application EP15181202.1 post-published as EP 3 133 554 A1.

The "raw" imaging data obtained in the data acquisition step can subsequently be used as a basis for tomogram construction [data processing step]. For example:
- A common technique used in tomographic reconstruction is so-called Back Projection (BP). BP is a procedure whereby an image of a specimen, taken along a given viewing axis, is back-projected (smeared out) along that viewing axis, through the specimen. When this is done for several appropriately chosen viewing axes, the various back-projected images will intersect and form a blurry image at the location of the specimen, which blurry image then forms a basis for subsequent reconstructive processing. This basic BP technique can, if desired, be modified by applying an appropriate filter to the image data prior to the tomographic reconstruction process, resulting in a procedure that is referred to as Filtered Back Projection (FBP).
- As an alternative and/or supplement to the use of BP, one can instead make use of an iterative reconstruction technique to produce a tomographic image. Examples of such iterative techniques include SIRT (Simultaneous Iterative Reconstruction Technique), ART (Algebraic Reconstruction Technique), DART (Discrete ART), SART (Simultaneous ART), *etc*. Such iterative techniques (generally) have the advantage of being less noise-sensitive, and of allowing (physical) constraints to be applied to the reconstruction process; however, because they employ several iterations, they tend to be more time-consuming, and to converge relatively slowly.

Although prior-art data processing techniques such as those set forth above have produced tolerable results up to now, the current inventors have worked extensively to provide an innovative alternative to conventional approaches. The results of this endeavor are the subject of the current invention.

It is an object of the invention to provide an innovative tomographic imaging technique. More specifically, it is an object of the invention that this technique should employ a radically different data processing strategy as compared to known techniques.

These and other objects are achieved in a method as set forth in the opening paragraph above, in which method said reconstruction step is performed in multiple iterations comprising the following steps:
(i) Using a Back Projection technique to produce an initial tomogram from a set of initial images;
(ii) Subjecting said initial tomogram to a mathematical filtering operation, thereby producing an adjusted tomogram;
(iii) Using a Forward Projection technique on said adjusted tomogram to dissociate it into a set of calculated images;
(iv) Repeating steps (i)-(iii) until said calculated images satisfy an acceptance criterion, characterized in that said mathematical filtering operation serves to manipulate a frequency spectrum of said initial tomogram in Fourier space.
In each repeat iteration, the input to step (i) derives from the output from previous step (iii).

The current invention uses an iterative reconstruction scheme in which, per iteration, a mathematical filter is applied (in reconstruction space) in order to manipulate the tomographic data - with the ultimate aim of allowing acceleration of the convergence process to a desired result, while simultaneously providing an extra means of adjusting the quality of the final tomogram. On a more abstract level, the employed filtering can be used to accentuate certain (higher) frequencies and suppress other (lower) frequencies in Fourier space, which can be used to considerably sharpen back-projected imagery before a subsequent reconstruction iteration. Such filtering can, for example, be performed using an appropriately chosen/regularized (space-invariant) Laplace operator or convolution operator, for instance. By sub-dividing the reconstructive process into iterations, the exact form of the applied filter does not have to be the same for all iterations/steps, but can instead be optimized (fine-tuned) on a step-by-step basis. The "acceptance criterion" referred to here may, for example, be a pre-defined threshold value of a metric that compares/correlates the calculated images to progenitor initial images / reference images; the skilled artisan will be familiar with various mathematical divergence measures that can be used in this regard. The "Forward Projection" alluded to here can also be referred to as "re-projection", and may be seen as being the opposite (mathematical adjoint operation) of "Back Projection".

A particularly effective embodiment of the present invention can be achieved if the basic "filtered iterative reconstruction" technique referred to in the previous paragraph is performed in a "multi-grid" manner, whereby one starts with a relatively coarse-grid (low-resolution) tomogram and progresses iteratively through successively finer grids (higher resolutions). Such an approach can result in significantly increased computational efficiency since, as a rule of thumb, coarsening data by a factor of two tends to reduce computation time by a factor of sixteen. The relatively coarse initial tomogram can, for example, be achieved by:
- Using a coarse data acquisition strategy, with a relatively low density of viewing axes; or
- Applying downsampling/binning to relatively fine acquisition data, to deliberately blur/coarsen it.

The filtering that characterizes the current invention can be used to de-blur an initial tomogram, thus producing an improved "update" tomogram that can serve as a basis for the next iteration of the reconstruction process. The same approach can, if desired, also be used to deliberately decrease the resolution of a successor tomogram relative to a progenitor tomogram, so as to perform intentional blurring.

A special embodiment of the current invention comprises the following additional steps:
- Comparing given calculated images to corresponding initial images, and calculating a set of transformations necessary to map the former onto the latter;
- Using said set of transformations to modify the initial images used in step (i) of a subsequent iteration.
Such an embodiment may be regarded as being a hybrid of the current invention and the invention set forth in co-pending European Patent Application EP15182129.5 post-published as EP 3 136 345 A1, in that it combines/intermixes the following activities:
- Mathematical filtering of tomograms in mathematical/reconstruction space;
- Geometrical manipulation of images in physical/image space.
In such an approach, the iterative reconstruction process is "tweaked from both sides", to achieve an even better result.

For good order, attention is drawn to the following prior art documents:
- WO 2015/125086 A1;
- P. Bleuet et al., "SEM-based system for 100nm X-ray tomography for the analysis of porous silicon", Proc. SPIE 9212, pp. 1-9 (2014),
which serve as background art for the present invention.

The invention will now be elucidated in more detail on the basis of exemplary embodiments and the accompanying schematic drawings, in which:
Figure 1 renders a perspective view of a specimen undergoing tomographic imaging, and serves to explain certain (reference) geometric aspects of the current invention.
Figure 2 renders a longitudinal cross-sectional elevation of a particular type of CPM in which an embodiment of the current invention can be carried out using a CT module.
Figure 3 illustrates a CT module suitable for use in a CPM such as that shown in Figure 2.

### Embodiment 1

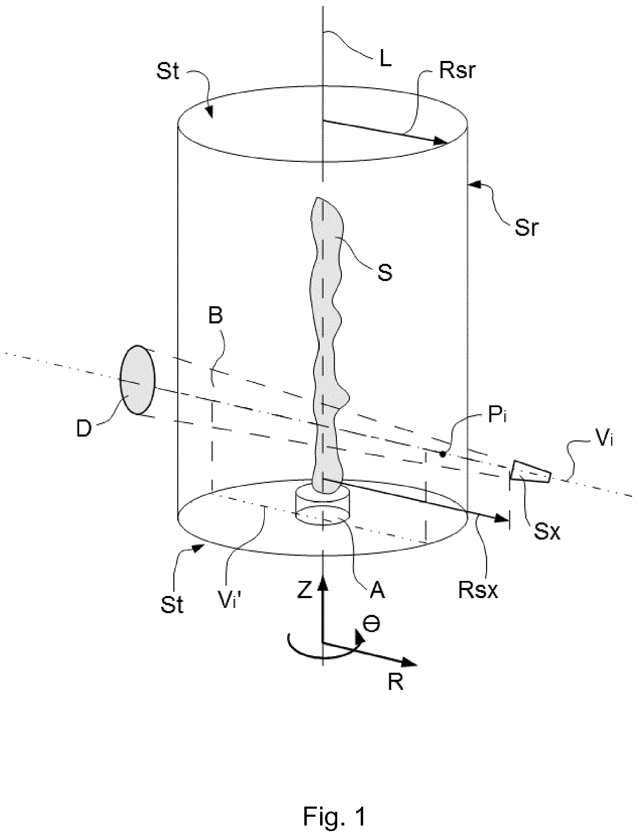

Figure 1 renders a perspective view of a specimen S undergoing tomographic imaging, and serves to explain certain (reference) geometric aspects of the current invention. In the Figure, an elongated specimen S (which may be macroscopic, micron-scale, or nanometer-scale, for example) has an associated longitudinal axis L. A radiation source Sx produces a beam B of radiation (typically X-rays) that propagates along an axis Vᵢ, which may be regarded as a viewing axis or line of sight. As here illustrated, Vᵢ is substantially normal to longitudinal axis L. Having traversed a portion of the specimen S, the beam B impinges upon a (diametrically opposed) detector D, which may, for example, be a Silicon Drift Detector (SDD), Silicon Lithium (Si(Li)) detector, or other suitable detector. The beam B may be regarded as being (for example) cone- or fan-shaped, depending on the effective shape that the detector D "presents" to the source Sx. The detector D forms an electronic image of said portion of the specimen S, which can be stored in an electronic memory. This procedure is then repeated for a series of different viewing axes Vᵢ, allowing the specimen S to be viewed along different lines of sight; thereafter, the various images acquired in this manner are used as input to a mathematical reconstruction procedure to produce a tomogram. The various viewing axes Vᵢ are achieved by employing a stage apparatus to produce relative motion between the source Sx and specimen S, *e.g*. by producing translational/rotational motion of the source Sx / detector D and/or the specimen S in a pre-determined way. Such stage apparatus may, for example, comprise one or more linear motors, piezoelectric actuators, stepper motors, voice coil motors, pneumatic/hydraulic actuators, *etc*., and can readily be tailored by the skilled artisan to suit the needs of a given setup. In the specific embodiment depicted here, stage apparatus A can translate/rotate specimen S relative to source Sx / detector D.

Also shown in the Figure is a virtual reference surface Sr, which, in this case, is a cylindrical surface whose cylindrical axis coincides with longitudinal axis L. This reference surface Sr has a radius Rsr, chosen to be less than or equal to the distance Rsx of the source Sx from the axis L. The viewing axis Vᵢ intersects this reference surface Sr at intersection point Pᵢ. Note that, if viewing axis Vᵢ is projected linearly along L, it will coincide with a diameter of a virtual disc-shaped terminal surface St at butt ends of the surface Sr. Associated with the reference surface Sr is a cylindrical coordinate system (R, θ, Z). The set {Pᵢ} of intersection points Pᵢ corresponding to the abovementioned series of viewing axes Vᵢ can be regarded as representing a "data acquisition locus", such as the circular or helical scanning path referred to above, or the lattice-like locus set forth in aforementioned patent application EP 3 133 554 A1, for example.

### Embodiment 2

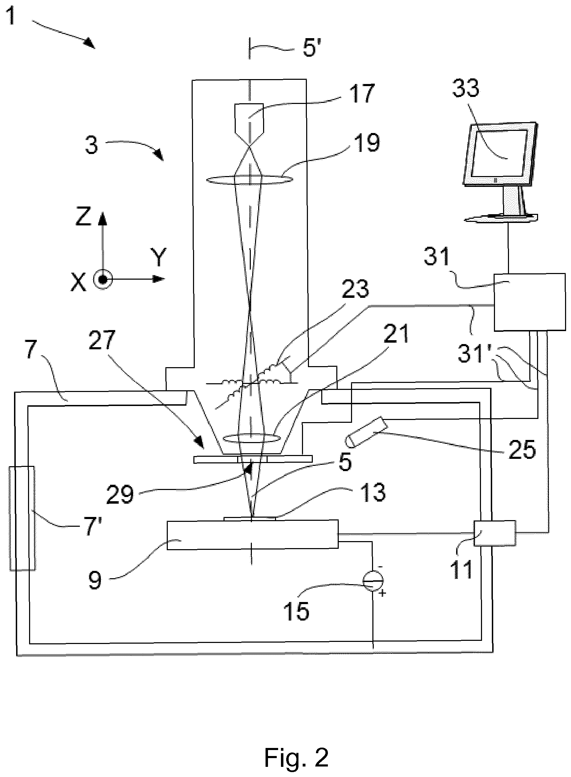

Figure 2 is a highly schematic depiction of an embodiment of a CPM 1 that can be used in conjunction with the present invention; more specifically, it shows an embodiment of a SEM - though, in the context of the current invention, it could just as validly be an ion-based microscope, for example, or a TEM, for instance. The microscope 1 comprises a particle-optical column / illuminator 3, which produces a beam 5 of charged particles (in this case, an electron beam) that propagates along a particle-optical axis 5'. The particle-optical column 3 is mounted on a vacuum chamber 7, which comprises a specimen holder 9 and associated stage/actuator 11 for holding/positioning a specimen 13. The vacuum chamber 7 is evacuated using vacuum pumps (not depicted). With the aid of voltage source 15, the specimen holder 9, or at least the specimen 13, may, if desired, be biased (floated) to an electrical potential with respect to ground.

The particle-optical column 3 comprises an electron source 17 (such as a Schottky emitter), (electrostatic/magnetic) lenses 19, 21 (in general, more complex in structure than the schematic depiction here) to focus the electron beam 5 onto the specimen 13, and a deflection unit 23 to perform beam deflection / scanning of the beam 5. When the beam 5 impinges on / is scanned across the specimen 13, it will precipitate emission of various types of "stimulated" radiation, such as backscattered electrons, secondary electrons, X-rays and cathodoluminescence (infra-red, visible and/or ultra-violet photons); one or more of these radiation types can then be sensed/recorded using one or more detectors, which may form an image, spectrum, diffractogram, etc., typically by assembling a "map" (or "matrix") of detector output as a function of scan position on the specimen. The present Figure shows two such detectors, 25, 27, which may, for example, be embodied as follows:
- Detector 25 may, for example, be an electron detector (such as an Solid State PhotoMultiplier), X-ray detector (such as an SDD or Si(Li) sensor) or a light detector (such as a photodiode).
- Detector 27 is a segmented electron detector, comprising a plurality of independent detection segments (*e.g*. quadrants) disposed about a central aperture 29 (allowing passage of the beam 5). Such a detector can, for example, be used to investigate (the angular dependence of) a flux of output (secondary or backscattered) electrons emerging from the specimen 13.

These are just examples, and the skilled artisan will understand that other detector types, numbers and geometries/configurations are possible.

The microscope 1 further comprises a controller / computer processing unit 31 for controlling *inter alia* the lenses 19 and 21, the deflection unit 23, and detectors 25, 27, and displaying information gathered from the detectors 25, 27 on a display unit 33 (such as a flat panel display); such control occurs *via* control lines (buses) 31'. The controller 31 (or another controller) can additionally be used to perform various mathematical processing, such as combining, integrating, subtracting, false colouring, edge enhancing, and other processing known to the skilled artisan. In addition, automated recognition processes (*e.g*. as used for particle analysis) may be included in such processing.

Also depicted is a vacuum port 7', which may be opened so as to introduce/remove items (components, specimens) to/from the interior of vacuum chamber 7, or onto which, for example, an ancillary device/module may be mounted (not depicted). A microscope 1 may comprise a plurality of such ports 7', if desired.

In the context of the current invention, the microscope 1 can also comprise an *in situ* CT module 7" as shown in Figure 3. In this figure, the CPM's specimen holder 9 has been provided with a metal target 13', which is positioned (using actuator 11) so that electron beam 5 impinges upon it, thus producing *Bremsstrahlung* X-rays in a variety of directions. The Figure shows a beam B of such X-rays that propagate to one side from target 13' (effective source Sx) into module 7", where they pass through a specimen S and impinge upon a detector D: compare to Figure 1. The specimen S is mounted on a stage apparatus A that allows the specimen S to be positioned/moved (typically translated and rotated) relative to the source Sx.

Such a CT module 7" may be permanently present (*ab initio*) in the vacuum enclosure 7, or it may be an add-on module that can be mounted (post-manufacture of the CPM 1) on/within a spare vacuum port 7', for example.

## Claims

1. A method of investigating a specimen (S) using a tomographic imaging apparatus comprising:
- A specimen holder, for holding the specimen;
- A source (Sx), for producing a beam (B) of radiation that can be directed at the specimen;
- A detector (D), for detecting a flux of radiation transmitted through the specimen from the source;
- A stage apparatus (A), for producing relative motion of the source with respect to the specimen, so as to allow the source and detector to image the specimen along a series of different viewing axes (Vi);
- A processing apparatus, for performing a mathematical reconstruction step whereby output from the detector is compiled into a tomographic image of at least part of the specimen,
wherein said reconstruction step is performed in multiple iterations, which comprise the following steps:
(i) Using a Back Projection technique to produce an initial tomogram from a set of initial images;
(ii) Subjecting said initial tomogram to a mathematical filtering operation, thereby producing an adjusted tomogram;
(iii) Using a Forward Projection technique on said adjusted tomogram to dissociate it into a set of calculated images;
(iv) Repeating steps (i)-(iii) until said calculated images satisfy an acceptance criterion, **characterized in that** said mathematical filtering operation serves to manipulate a frequency spectrum of said initial tomogram in Fourier space.

2. A method according to claim 1, wherein said mathematical filtering operation accentuates higher frequencies and suppresses lower frequencies.

3. A method according to claim 1 or 2, wherein said mathematical filtering operation employs a space-invariant filter.

4. A method according to any of claims 1-3, wherein, for at least one iteration:
- The initial tomogram has a first resolution;
- The adjusted tomogram has a second resolution, different to said first resolution.

5. A method according to claim 4, wherein said first resolution is lower than said second resolution.

6. A method according to claim 4, wherein said first resolution is higher than said second resolution.

7. A method according to any of claims 1-6, comprising the following additional steps:
- Comparing given calculated images to corresponding initial images, and calculating a set of transformations necessary to map the former onto the latter;
- Using said set of transformations to modify the initial images used in step (i) of a subsequent iteration.

8. A method according to any of claims 1-7, wherein said relative motion of the source with respect to the specimen traces out a locus selected from the group comprising a substantially circular curve, a substantially helical curve, and combinations hereof.

9. A method according to any of claims 1-8, comprising the following steps:
- Considering a virtual reference surface that surrounds the specimen and is substantially centered thereon;
- Considering an incoming point of intersection of each of said viewing axes with this reference surface, thereby generating a set of such intersection points corresponding to said series of viewing axes;
- Choosing discrete viewing axes in said series so as to cause said set to comprise a two-dimensional lattice of points located areally on said reference surface in a substantially uniform distribution.

10. A tomographic imaging apparatus comprising:
- A specimen holder, for holding a specimen (S);
- A source (Sx), for producing a beam (B) of radiation that can be directed at the specimen;
- A detector (D), for detecting a flux of radiation transmitted through the specimen from the source;
- A stage apparatus (A), for producing relative motion of the source with respect to the specimen, so as to allow the source and detector to image the specimen along a series of different viewing axes (Vi);
- A processing apparatus, for performing a mathematical reconstruction step whereby output from the detector is compiled into a tomographic image of at least part of the specimen,
which processing apparatus is configured such that said reconstruction step is performed in multiple iterations, which comprise the following steps:
(i) Using a Back Projection technique to produce an initial tomogram from a set of initial images;
(ii) Subjecting said initial tomogram to a mathematical filtering operation, thereby producing an adjusted tomogram;
(iii) Using a Forward Projection technique on said adjusted tomogram to dissociate it into a set of calculated images;
(iv) Repeating steps (i)-(iii) until said calculated images satisfy an acceptance criterion, **characterized in that** said mathematical filtering operation is configured to manipulate a frequency spectrum of said initial tomogram in Fourier space.

11. An apparatus according to claim 10, wherein said mathematical filtering operation is configured to accentuate higher frequencies and suppress lower frequencies.

12. A charged-particle microscope (1) comprising a tomographic imaging apparatus as claimed in claim 10 or 11.

## Patentansprüche

1. Verfahren zum Untersuchen einer Probe (S) unter Verwendung einer tomographischen Abbildungseinrichtung, Folgendes umfassend:
- einen Probenhalter zum Halten der Probe;
- eine Quelle (Sx) zum Herstellen eines Strahls (B) von Bestrahlung, der auf die Probe gerichtet werden kann;
- einen Detektor (D) zum Erfassen eines Bestrahlungsflusses, der durch die Probe von der Quelle übertragen wird;
- eine Objekttischeinrichtung (A) zum Herstellen einer relativen Bewegung der Quelle in Bezug auf die Probe, um zu ermöglichen, dass die Quelle und der Detektor die Probe entlang einer Reihe von unterschiedlichen Sichtachsen (Vi) abbilden;
- eine Verarbeitungseinrichtung zum Durchführen eines mathematischen Rekonstruktionsschrittes, wodurch eine Ausgabe von dem Detektor in ein tomographisches Bild wenigstens eines Teils der Probe zusammengestellt wird,
wobei der Rekonstruktionsschritt in mehrfachen Wiederholungen durchgeführt wird, die die folgenden Schritte umfassen:
(i) Verwenden einer Rückwärtsprojektionsmethode, um ein anfängliches Tomogramm von einem Satz von anfänglichen Bildern herzustellen;
(ii) Unterziehen des anfänglichen Tomogramms einem mathematischen Filtervorgang, wobei dadurch ein angepasstes Tomogramm hergestellt wird;
(iii) Verwenden einer Vorwärtsprojektionsmethode auf dem angepassten Tomogramm, um es in einen Satz von berechneten Bildern zu trennen;
(vi) Wiederholen der Schritte (i)-(iii), bis die berechneten Bilder ein Akzeptanzkriterium erfüllen, **dadurch gekennzeichnet, dass** der mathematische Filtervorgang dazu dient, ein Frequenzspektrum des anfänglichen Tomogramms im Fourier-Raum zu manipulieren.

2. Verfahren nach Anspruch 1, wobei der mathematische Filtervorgang höhere Frequenzen akzentuiert und niedrigere Frequenzen unterdrückt.

3. Verfahren nach Anspruch 1 oder 2, wobei der mathematische Filtervorgang einen räumlich unveränderlichen Filter einsetzt.

4. Verfahren nach einem der Ansprüche 1-3, wobei für wenigstens eine Wiederholung:
- das anfängliche Tomogramm eine erste Auflösung aufweist;
- das angepasste Tomogramm eine zweite Auflösung aufweist, die sich von der ersten Auflösung unterscheidet.

5. Verfahren nach Anspruch 4, wobei die erste Auflösung niedriger als die zweite Auflösung ist.

6. Verfahren nach Anspruch 4, wobei die erste Auflösung höher als die zweite Auflösung ist.

7. Verfahren nach einem der Ansprüche 1-6, umfassend die folgenden zusätzlichen Schritte:
- Vergleichen von gegebenen berechneten Bildern mit entsprechenden anfänglichen Bildern und Berechnen eines Satzes von Transformationen, die nötig sind, um die ersteren auf die letzteren abzubilden;
- Verwenden des Satzes von Transformationen, um die anfänglichen Bilder, die in Schritt (i) einer nachfolgenden Wiederholung verwendet werden, zu modifizieren.

8. Verfahren nach einem der Ansprüche 1-7, wobei die relative Bewegung der Quelle in Bezug auf die Probe eine Ortskurve zeichnet, die aus der Gruppe ausgewählt ist, die eine im Wesentlichen kreisförmige Kurve, eine im Wesentlichen schraubenförmige Kurve und Kombinationen davon umfasst.

9. Verfahren nach einem der Ansprüche 1-8, umfassend die folgenden Schritte:
- Betrachten einer virtuellen Referenzoberfläche, die die Probe umgibt und im Wesentlichen darauf zentriert ist;
- Betrachten eines eintretenden Schnittpunktes jeder der Sichtachsen mit dieser Referenzoberfläche, wobei dadurch ein Satz von derartigen Schnittpunkten erzeugt wird, die der Reihe von Sichtachsen entsprechen;
- Auswählen von diskreten Sichtachsen in der Reihe, um zu bewirken, dass der Satz ein zweidimensionales Gitter aus Punkten umfasst, die flächig auf der Referenzoberfläche in einer im Wesentlichen einheitlichen Verteilung gelegen sind.

10. Tomographische Abbildungseinrichtung, Folgendes umfassend:
- einen Probenhalter zum Halten einer Probe (S);
- eine Quelle (Sx) zum Herstellen eines Strahls (B) von Bestrahlung, der auf die Probe gerichtet werden kann;
- einen Detektor (D) zum Erfassen eines Bestrahlungsflusses, der durch die Probe von der Quelle übertragen wird;
- eine Objekttischeinrichtung (A) zum Herstellen einer relativen Bewegung der Quelle in Bezug auf die Probe, um zu ermöglichen, dass die Quelle und der Detektor die Probe entlang einer Reihe von unterschiedlichen Sichtachsen (Vi) abbilden;
- eine Verarbeitungseinrichtung zum Durchführen eines mathematischen Rekonstruktionsschrittes, wodurch eine Ausgabe von dem Detektor in ein tomographisches Bild wenigstens eines Teils der Probe zusammengestellt wird,
wobei die Verarbeitungseinrichtung konfiguriert ist, sodass der Rekonstruktionsschritt in mehrfachen Wiederholungen durchgeführt wird, die die folgenden Schritte umfassen:
(i) Verwenden einer Rückwärtsprojektionsmethode, um ein anfängliches Tomogramm von einem Satz von anfänglichen Bildern herzustellen;
(ii) Unterziehen des anfänglichen Tomogramms einem mathematischen Filtervorgang, wobei dadurch ein angepasstes Tomogramm hergestellt wird;
(iii) Verwenden einer Vorwärtsprojektionsmethode auf dem angepassten Tomogramm, um es in einen Satz von berechneten Bildern zu trennen;
(vi) Wiederholen der Schritte (i)-(iii) bis die berechneten Bilder ein Akzeptanzkriterium erfüllen, **dadurch gekennzeichnet, dass** der mathematische Filtervorgang konfiguriert ist, ein Frequenzspektrum des anfänglichen Tomogramms im Fourier-Raum zu manipulieren.

11. Einrichtung nach Anspruch 10, wobei der mathematische Filtervorgang konfiguriert ist, höhere Frequenzen zu akzentuieren und niedrigere Frequenzen zu unterdrücken.

12. Mikroskop (1) mit geladenen Teilchen, umfassend eine tomographische Abbildungseinrichtung nach Anspruch 10 oder 11.

## Revendications

1. Procédé d'investigation d'un spécimen (S) au moyen d'un appareil d'imagerie tomographique comprenant :
- un porte-échantillons, destiné à maintenir le spécimen ;
- une source (Sx), destinée à produire un faisceau (B) de rayonnement qui peut être dirigé sur le spécimen ;
- un détecteur (D), destiné à détecter un flux de rayonnement transmis à travers le spécimen et provenant de la source ;
- un appareil de scène (A), destiné à produire un mouvement relatif de la source par rapport au spécimen, de manière à permettre à la source et au détecteur de prendre l'image du spécimen le long d'une série d'axes de visualisation différents (Vi) ;
- un appareil de traitement, destiné à effectuer une étape de reconstruction mathématique moyennant quoi le résultat provenant du détecteur est compilé en une image tomographique d'au moins une partie du spécimen,
ladite étape de reconstruction étant effectuée en de multiples itérations, qui comprennent les étapes suivantes :
(i) utilisation d'une technique de projection noire afin de produire un tomogramme initial à partir d'un ensemble d'images initiales ;
(ii) soumission dudit tomogramme initial à une opération de filtration mathématique, produisant ainsi un tomogramme ajusté ;
(iii) utilisation d'une technique de projection avant sur ledit tomogramme ajusté pour le dissocier en un ensemble d'images calculées ;
(iv) répétition des étapes (i) à (iii) jusqu'à ce que lesdites images calculées satisfassent un critère d'acceptation,
**caractérisé en ce que** ladite opération de filtration mathématique sert à manipuler un spectre de fréquence dudit tomogramme initial dans l'espace de Fourier.

2. Procédé selon la revendication 1, dans lequel ladite opération de filtration mathématique accentue les fréquences les plus élevées et supprime les fréquences les plus basses.

3. Procédé selon la revendication 1 ou 2, dans lequel ladite opération de filtration mathématique emploie un filtre à espace invariant.

4. Procédé selon l'une quelconque des revendications 1 à 3, dans lequel, pour au moins une itération :
- le tomogramme initial comprend une première résolution ;
- le tomogramme ajusté comprend une seconde résolution, différente de ladite première résolution.

5. Procédé selon la revendication 4, dans lequel ladite première résolution est inférieure à ladite seconde résolution.

6. Procédé selon la revendication 4, dans lequel ladite première résolution est supérieure à ladite seconde résolution.

7. Procédé selon l'une quelconque des revendications 1 à 6, comprenant les étapes supplémentaires suivantes :
- comparaison d'images calculées données avec des images initiales correspondantes, et calcul d'un ensemble de transformations nécessaires pour faire correspondre ces premières avec ces dernières ;
- utilisation dudit ensemble de transformations pour modifier les images initiales utilisées dans l'étape (i) d'une itération suivante.

8. Procédé selon l'une quelconque des revendications 1 à 7, dans lequel ledit mouvement relatif de la source par rapport au spécimen dessine un locus choisi dans le groupe comprenant une courbe essentiellement circulaire, une courbe essentiellement hélicoïdale et des combinaisons de celles-ci.

9. Procédé selon l'une quelconque des revendications 1 à 8, comprenant les étapes suivantes consistant à :
- considérer une surface de référence virtuelle qui entoure le spécimen et qui est essentiellement centrée sur celui-ci ;
- considérer un point d'intersection entrant de chacun desdits axes de visualisation avec cette surface de référence, produisant ainsi un ensemble de tels points d'intersection correspondant à ladite série d'axes de visualisation ;
- choisir des axes de visualisation distincts dans ladite série de façon à amener ledit ensemble à comprendre un réseau à deux dimensions de points situés de manière aréale sur ladite surface de référence selon une répartition sensiblement uniforme.

10. Appareil d'imagerie tomographique comprenant :
- un porte-échantillons, destiné à maintenir un spécimen (S) ;
- une source (Sx), destinée à produire un faisceau (B) de rayonnement qui peut être dirigé sur le spécimen ;
- un détecteur (D), destiné à détecter un flux de rayonnement transmis à travers le spécimen et provenant de la source ;
- un appareil de scène (A), destiné à produire un mouvement relatif de la source par rapport au spécimen, de manière à permettre à la source et au détecteur de prendre l'image du spécimen le long d'une série d'axes de visualisation différents (Vi) ;
- un appareil de traitement, destiné à effectuer une étape de reconstruction mathématique moyennant quoi le résultat provenant du détecteur est compilé en une image tomographique d'au moins une partie du spécimen,
ledit appareil de traitement est conçu de sorte que ladite étape de reconstruction est effectuée en de multiples itérations, qui comprennent les étapes suivantes :
(i) utilisation d'une technique de projection noire afin de produire un tomogramme initial à partir d'un ensemble d'images initiales ;
(ii) soumission dudit tomogramme initial à une opération de filtration mathématique, produisant ainsi un tomogramme ajusté ;
(iii) utilisation d'une technique de projection avant sur ledit tomogramme ajusté pour le dissocier en un ensemble d'images calculées ;
(iv) répétition des étapes (i) à (iii) jusqu'à ce que lesdites images calculées satisfassent un critère d'acceptation,
**caractérisé en ce que** ladite opération de filtration mathématique est conçue pour manipuler un spectre de fréquence dudit tomogramme initial dans l'espace de Fourier.

11. Appareil selon la revendication 10, dans lequel ladite opération de filtration mathématique est conçue pour accentuer les fréquences les plus élevées et pour supprimer les fréquences les plus basses.

12. Microscope à particules chargées (1) comprenant un appareil d'imagerie tomographique selon la revendication 10 ou 11.
